# EUROPÄISCHE PATENTANMELDUNG

(11) **EP 1 722 252 A2**
(43) Veröffentlichungstag der Anmeldung: **15.11.2006**
(21) Anmeldenummer: 06113258.5
(22) Anmeldetag: 28.04.2006
(51) Int. Cl.: G01V 3/15

(54) **Handgeführter, scannender Untergrunddetektor**

(30) Priorität: 10.05.2005 DE 102005000054
(71) Anmelder: HILTI Aktiengesellschaft, 9494 Schaan (LI)
(72) Erfinder: Würsch, Christoph, 9470, Werdenberg (CH); Kaneider, Wilfried, 6800, Feldkirch-Tosters (AT)
(74) Vertreter: Wildi, Roland

(57) **Zusammenfassung**

Handgeführter scannender Untergrunddetektor (1) mit einem handhabbaren Gehäuse (4), das zur definiert beabstandeten Führung in einem Wandabstand (A) über einer zu untersuchenden Wandfläche (3) ausgebildet ist, und mit einem Sensormittel (5), welches im elektromagnetischen Hochfrequenzbereich sensibel ist, wobei ein elekromagnetisch wirksames Schirmmittel vorhanden ist, das den Wandabstand (A) im zumindest grösseren Umfangsbereich einer das Sensormittel (5) aussen umgebenden Abschirmkontur (9) bezüglich elektromagnetischer Störstrahlung im Hochfrequenzbereich abschirmt.

## Beschreibung

Die Erfindung bezeichnet einen handgeführten, scannenden Untergrunddetektor, insbesondere zur Detektion von in Beton oder Mauerwerk eingebetteten Armierungen oder Leitungen.

Im Baugewerbe spielt die Detektion eingebetteter Objekte eine wesentliche Rolle, sei es zur Detektion von Armierungseisen, Metallrohren, elektrischen Leitungen oder Kunststoffrohren. Auf die der Untergrunddetektion als solche zugrunde liegenden Detektionsmessverfahren, die nicht Gegenstand dieser Anmeldung sind, soll hier nicht weiter eingegangen werden. Allgemein werden eingebettete Objekte bspw. nach der US6541965 über die Änderung der Impedanz eines eingeprägten, magnetischen Nahfeldes, nach der W002063343 über die Änderung der Impedanz eines eingeprägten, elektrischen Nahfeldes oder nach der US5541605 elektromagnetisch über Radar detektiert und charakterisiert.

Insbesondere im Baugewerbe sind grob-rauhe (mit Unebenheiten von einigen mm) Wandflächen üblich, worunter im Sinne der Erfindung zumindest stückweise flache Oberflächen sowohl von Wänden als auch von Decken, Böden etc. zu verstehen sind.

Nach der DE10207477 wird ein derartiger Untergrunddetektor mit einem handhabbaren Gehäuse mit Führungsrädern und mit einem wandseitig angeordneten Sensormittel eindimensional scannend über die zu untersuchende Wandfläche hin- und herbewegt. Beim zugeordneten Messverfahren wird nach der EP1478949 ein Sensormittel mit breitbandigen, hochfrequenten Messimpulsen im Hochfrequenzbereich zwischen 100 MHz und 10 GHz angeregt und somit für unterschiedliche Frequenzen die komplexe Impedanz des Untergrundes gemessen, woraus über deren Änderung mittelbar auf im Untergrund eingeschlossene Objekte geschlossen werden kann. Eine derartige Messung von Änderung ist prinzipiell sehr empfindlich gegenüber äusseren Störungen nahe dem zu messenden Frequenzbereich. Durch den beim Scannen im Wandabstand zwischen dem Sensormittel und der Wandfläche offenen Luftspalt zwischen den Führungsrädern können jedoch Störungen, insbesondere elektromagnetische Störstrahlungen, ungedämpft zum Sensormittel gelangen und somit Fehlmessungen hervorrufen.

Zudem ist nach der JP1282490 ein Untergrunddetektor zur Messung der Impedanz des Untergrundes vorbekannt, dessen Sensormittel auf einem Schlitten über die zu untersuchende Wandfläche entlang gleitet. Dabei ist das Sensormittel im gesamten gehäuseseitigen Halbraum bis zum Schlitten hin über ein Schirmmittel elektromagnetisch abgeschirmt.

Nach der JP11118942 besteht zudem bei einem Untergrunddetektor das Schirmmittel aus bezüglich elektromagnetischer Strahlung absorbierendem oder undurchdringlichem Material.

Bezüglich elektromagnetischer Strahlung absorbierende Materialien sind üblicherweise bspw. ferroelektrische oder superparaelektrische Materialien; bezüglich elektromagnetischer Strahlung undurchdringliche Materialien sind üblicherweise bspw. elektrisch leitfähige Materialien.

Die Aufgabe besteht in der Realisierung eines handgeführten, scannenden Untergrunddetektors mit hoher Störsicherheit.

Die Aufgabe wird im Wesentlichen durch die Merkmale des Anspruchs 1 gelöst. Vorteilhafte Weiterbildungen ergeben sich aus den Unteransprüchen.

So weist ein handgeführter scannender Untergrunddetektor mit einem handhabbaren, zur definiert beabstandeten Führung in einem Wandabstand über einer zu untersuchenden Wandfläche ausgebildeten, Gehäuse ein Sensormittel auf, welches im elektromagnetischen Hochfrequenzbereich sensibel ist, wobei ein elekromagnetisch wirksames Schirmmittel vorhanden ist, das den Wandabstand im zumindest grösseren Umfangsbereich einer das Sensormittel aussen umgebenden Abschirmkontur bezüglich elektromagnetischer Störstrahlung im Hochfrequenzbereich abschirmt.

Durch das Schirmmittel zur Abschirmung des Sensormittels gegenüber den Wandabstand durchdringende elektromagnetische Störstrahlung kann die Störsicherheit des Sensormittels wesentlich erhöht werden.

Vorteilhaft besteht das Schirmmittel zumindest schichtweise aus einem elektrisch leitfähigen Material, wodurch auf Grund des Skin-Effektes in ökonomisch günstiger Weise eine hinreichende Abschirmung von elektromagnetischer Strahlung im Hochfrequenzbereich erzielbar ist. Ebenso eigenen sich hoch permeable (Ferrit, Plastoferrit) und/oder hoch dielektrische (Bariumtitanat) Materialien durch die Hystereseverluste gut zur Abschirmung.

Vorteilhaft ist das Schirmmittel zumindest stückweise umfänglich am Gehäuse angeordnet, wodurch über den somit ausgenutzten maximalen Abstand vom Sensormittel die Wirkung der Abschirmung verbessert wird. Geeignete derartige Schirmmittel wären bspw. längs und/oder quer zur Scannrichtung dicht nebeneinander angeordnete, absorbierende oder leitfähige Räder oder Raupen.

Vorteilhaft erstreckt sich das Schirmmittel vom Gehäuse wandseitig frei auskragend in den Bereich des Wandabstandes hinein, wodurch das Schirmmittel nur gehäuseseitig festgelegt ist. Geeignete derartige Schirmmittel wären bspw. absorbierende oder leitfähige Federelemente wie Gitterstrukturen.

Vorteilhaft ist das Schirmmittel elastisch ausgebildet, wodurch eine weitgehend abschliessende Ausfüllung des Wandabstands durch das Schirmmittel auch bei grob-rauhen Wandflächen realisiert ist, ohne eine signifikante Selbsthemmung der Scannbewegung durch Reibung, Verhakung, Verkeilung etc. mit der Wandfläche hervorzurufen. Geeignete elastische Schirmmittel sind bspw. absorbierende oder leitfähige Schaumstoffe / Elastomere, Faltenbälge (wandseitig abgerundet), Federelemente wie dicht nebeneinander angeordnete Spiralfedern oder gefederte Schienen.

Vorteilhaft ist das Schirmmittel zumindest stückweise flächig ausgebildet, wodurch die Bauteilelastizität im Wesentlichen durch eine Biegung in der Fläche erzielbar ist. Flächige Schirmmittel sind zudem weitgehend polarisationsunabhängig wirksam. Geeignete flächige Schirmmittel sind bspw. absorbierende oder leitfähige Federbleche, Textilien oder Faserstoffe.

Vorteilhaft ist das Schirmmittel zumindest stückweise länglich ausgebildet, wodurch die Bauteilelastizität im Wesentlichen durch eine Biegung in der Linie erzielbar ist. Geeignete längliche Schirmmittel wären bspw. absorbierende oder leitfähige Borsten oder Faserbündel.

Ebenso ist eine beliebige Kombination dieser verschiedenartiger Schirmmittel im Sinne der Erfindung.

Die Erfindung wird bezüglich vorteilhafter Ausführungsbeispiele näher erläutert mit:
- Fig. 1: als Untergrunddetektor mit Führungsrädern in Seitenansicht
- Fig. 2: als Alternative
- Fig. 3: als weitere Alternative
- Fig. 4: als schematische Ansicht des Schirmmittels von Unten

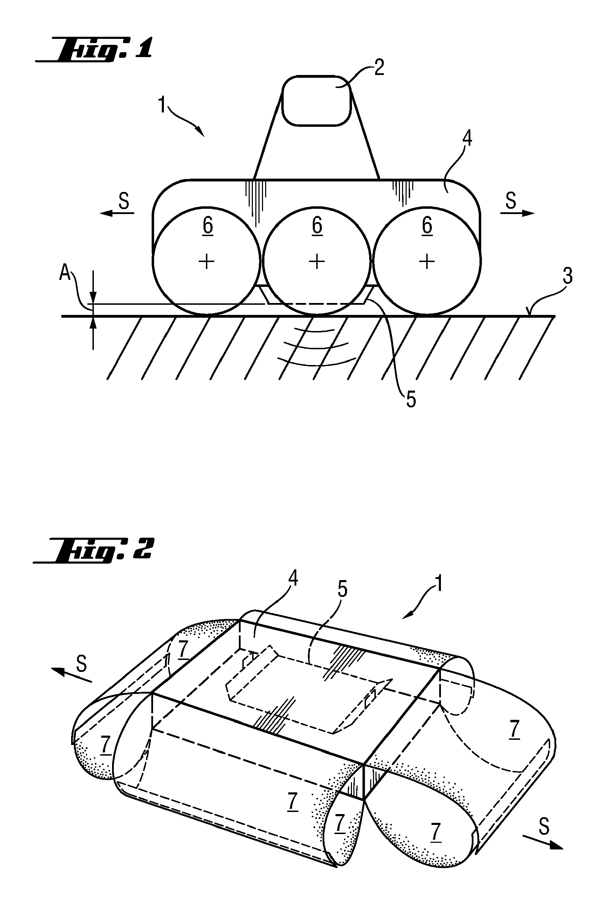

Nach Fig. 1 weist ein handgeführter, längs einer Scanrichtung S scannender Untergrunddetektor 1 ein über einen Handgriff 2 handhabbares Gehäuse 4 auf, das zur definiert beabstandeten Führung in einem Wandabstand A über einer zu untersuchenden Wandfläche 3 ausgebildet ist. Zudem weist der Untergrunddetektor 1 ein wandseitig orientiertes Sensormittel 5 in Form einer Planarantenne für den elektromagnetischen Hochfrequenzbereich von 100 MHz bis 10 GHz auf. Am Gehäuse 4 ist zur Abschirmung von elektromagnetischer Strahlung ein Schirmmittel in Form von jeweils drei vollflächigen, radial grossen sowie zueinander dicht benachbarten Führungsrädern 6 aus dem elektromagnetische Strahlung absorbierenden, leitfähigen und magnetischen Kunststoff mit Russpartikeln und Ferritkörnern je (längs zur Scanrichtung S orientierten) Längsseite des Gehäuses 4 ausgebildet. Dieses Schirmmittel erstreckt sich somit im überwiegenden Flächenanteil über den Wandabstand A sowie im grösseren Umfangsteilbereich umfänglich um das Sensormittel 5 herum.

Nach Fig. 2 besteht bei einem alternativen, nur schematisch angedeutetem Untergrunddetektor 1 mit einem wandseitig orientierten Sensormittel 5 das Schirmmittel aus elastisch ausgebildeten, flächig gebogenen Lamellen 7 aus elektrisch leitfähig beschichteten Polymerfolien. Diese jeweils einseitig frei auskragenden Lamellen 7 sind umfänglich jeweils an den vier Seiten des Gehäuses 4 angeordnet und umfassen umfänglich somit im wesentlichen das Sensormittel 5. Jeweils zwei an der gleichen Seite angeordnete, jedoch unterschiedlich (wandseitig und seitlich) auskragende Lamellen 7 greifen endseitig teilweise ineinander ein.

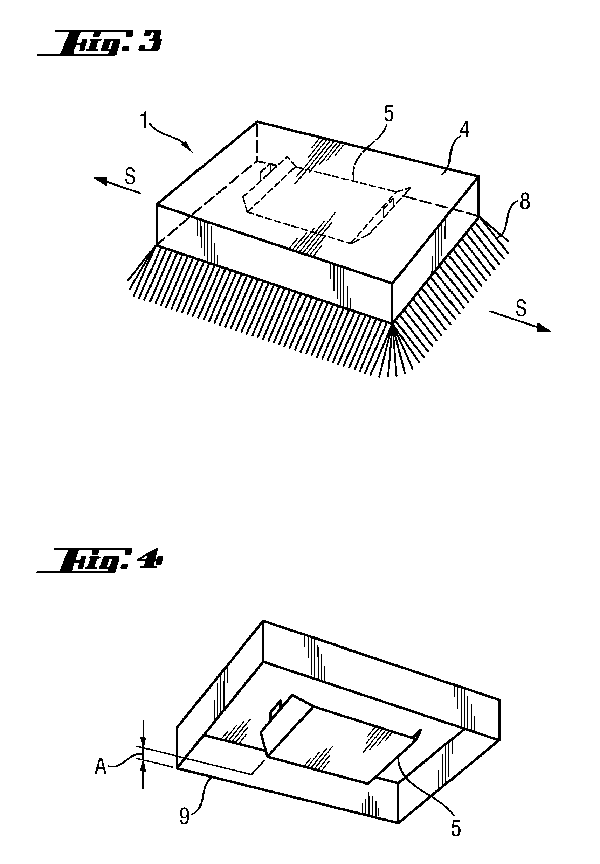

Nach Fig. 3 besteht bei einem alternativen, nur schematisch angedeutetem Untergrunddetektor 1 mit einem wandseitig orientierten Sensormittel 5 das Schirmmittel aus einer Vielzahl dünner, jeweils länglicher Borsten 8 aus Metall, die umfänglich vom Gehäuse 4 wandseitig frei auskragen und somit das Sensormittel 5 umfänglich vollständig umfassen.

Nach der in Fig. 4 von Unten (also wandseitige Sichtweise) gezeigten schematischen Darstellung des Schirmmittels ist das als Planarantenne ausgebildete Sensormittel 5, welches im elektromagnetischen Hochfrequenzbereich sensibel ist, im Idealfall durch eine allgemeine geometrische Abschirmkontur 9 abschirmt, welche über den gesamten Wandabstand A sowie im gesamten Umfangsbereich abschirmend wirksam bezüglich elektromagnetischer Störstrahlung im Hochfrequenzbereich ist. Dabei ist das, das Sensormittel 5 aussen umgebende, Schirmmittel bspw. konkret über Führungsräder 6 nach Fig. 1, Lamellen 7 nach Fig. 2 oder Borsten 8 nach Fig. 3 ausgebildet.

## Patentansprüche

1. Handgeführter scannender Untergrunddetektor mit einem handhabbaren Gehäuse (4), das zur definiert beabstandeten Führung in einem Wandabstand (A) über einer zu untersuchenden Wandfläche (3) ausgebildet ist, und mit einem Sensormittel (5), welches im elektromagnetischen Hochfrequenzbereich sensibel ist, **dadurch gekennzeichnet, dass** ein elekromagnetisch wirksames Schirmmittel vorhanden ist, das den Wandabstand (A) im zumindest grösseren Umfangsbereich einer das Sensormittel (5) aussen umgebenden Abschirmkontur (9) bezüglich elektromagnetischer Störstrahlung im Hochfrequenzbereich abschirmt.

2. Untergrunddetektor nach Anspruch 1, **dadurch gekennzeichnet, dass** das Schirmmittel zumindest schichtweise aus einem elektrisch leitfähigen, permeablen und/oder dielektrischen Material besteht.

3. Untergrunddetektor nach Anspruch 1 oder 2, **dadurch gekennzeichnet, dass** das Schirmmittel zumindest stückweise umfänglich am Gehäuse (4) angeordnet ist.

4. Untergrunddetektor nach einem der Ansprüche 1 bis 3, **dadurch gekennzeichnet, dass** sich das Schirmmittel vom Gehäuse (4) wandseitig frei auskragend in den Bereich des Wandabstandes (A) hinein erstreckt.

5. Untergrunddetektor nach einem der vorherigen Ansprüche, **dadurch gekennzeichnet, dass** das Schirmmittel elastisch ausgebildet ist.

6. Untergrunddetektor nach einem der vorherigen Ansprüche, **dadurch gekennzeichnet, dass** das Schirmmittel zumindest stückweise flächig ausgebildet ist.

7. Untergrunddetektor nach einem der vorherigen Ansprüche, **dadurch gekennzeichnet, dass** das Schirmmittel zumindest stückweise länglich ausgebildet ist.
